# EUROPÄISCHE PATENTANMELDUNG

(11) **EP 3 827 953 A1**
(43) Veröffentlichungstag der Anmeldung: **02.06.2021**
(21) Anmeldenummer: 19212508.6
(22) Anmeldetag: 29.11.2019
(51) Int. Cl.: B28D 1/04, B23Q 9/00

(54) **WANDSÄGE MIT PERMANENTMAGNETMOTOR**

(71) Anmelder: EURODIMA GmbH & Co KG, 5073 Wals-Himmelreich (AT)
(72) Erfinder: Winkler, Wolfgang, 5073 Wals-Himmelreich (AT)
(74) Vertreter: Schwarz & Partner Patentanwälte OG

(57) **Zusammenfassung**

Die Erfindung betrifft eine Wandsäge, welche entlang einer Führungsschiene verschiebbar ist, umfassend eine Sägeeinheit (2) mit Schwenkarm (3) und einem auf dem Schwenkarm (3) montierbarem Sägeblatt, vorzugsweise einen Blattschutz mit Schutzführung (4), und zumindest einen Motor (1), wobei der Motor ein Permanentmagnetmotor ist, wobei mit dem zumindest einen Motor (1) die Wandsäge entlang der Führungsschiene bewegbar und/oder der Schwenkarm antreibbar ist, wobei das Rastmoment der Permanentmagnetmotoren im Verhältnis zum Nenndrehmoment größer als 20 %, vorzugsweise größer als 30 % ist.

## Beschreibung

Die vorliegende Erfindung betrifft eine Wandsäge, welche entlang einer Führungsschiene verschiebbar ist, umfassend eine Sägeeinheit mit Schwenkarm und einem auf dem Schwenkarm montierbarem Sägeblatt, vorzugsweise einen Blattschutz mit Schutzführung und zumindest einen Motor, wobei der Motor ein Permanentmagnetmotor ist, wobei der zumindest eine Motor die Wandsäge entlang der Führungsschiene bewegt und/oder den Schwenkarm antreibt.

### HINTERGRUND DER ERFINDUNG UND STAND DER TECHNIK

Wandsägen ermöglichen das Durchtrennen von Wänden, Decken und Böden aus harten Baustoffen wie beispielsweise Beton. Die gängigsten Wandsägen bestehen aus einem Sägeblatt, zum Beispiel ein Diamantsägeblatt, welches an einem Sägekopf montiert ist, der wiederum am freien Ende eines Schwenkarms sitzt. Der Schwenkarm ist am Grundkörper der Wandsäge montiert und der Grundkörper lässt sich entlang einer Führungsschiene verschieben. Die Führungsschiene wird an einer Wand oder dergleichen angebracht und der Schwenkarm ermöglicht ein Eintauchen des Sägeblatts in die Wand. Zusätzlich befindet sich zum Schutz des Bedieners der im Hoch- und Tiefbau regelmäßig verwendeten Wandsäge am Grundkörper der Wandsäge noch ein Blattschutzhalter mit zugehörigem Blattschutz.

Sowohl der Schwenkarm, an welchem das Sägeblatt sitzt, als auch der Grundkörper, welcher sich entlang der Führungsschiene bewegen kann, werden in einigen Ausführungsvarianten von Elektromotoren angetrieben, wobei ein Motor der Verschiebung der Wandsäge entlang der Führungsschiene und ein zweiter Motor dem Verstellen des Schwenkarms, um unterschiedliche Schnitttiefen zu erlauben, dient.

In EP 1 579 969 B1 ist eine Wandsäge mit nur einem antreibenden Motor offenbart, welcher zwei vorzugsweise elektromagnetische Blockiereinrichtungen zum Blockieren des Schwenkarm- und Führungsschienen-Antriebs umfasst. Diese sind als Magnetkupplungen ausgebildet, welche ein maximal erreichbares Blockiermoment aufweisen und einen Überlastungsschutz gewährleisten. Im stromlosen Zustand sind beide Magnetkupplungen blockadewirksam gesetzt, um eine Selbsthemmung sowohl des Führungsschienen-Antriebs als auch des Schwenkarm-Antriebs zu gewährleisten und ein unbeabsichtigtes Verfahren der Wandsäge zu vermeiden.

Weitere bekannte Wandsägen verwenden beispielsweise Schneckengetriebe oder Scheibenbremsen als Blockiereinrichtungen. Auch diese sollen ein unbeabsichtigtes Verfahren der Wandsäge an der Führungsschiene bzw. des Schwenkarms vermeiden. Bei allen im Stand der Technik bekannten Blockiereinrichtungen handelt es sich demnach um Bremsen, die den Schwenkarm der Wandsäge in seiner Position bzw. Ebene halten sollen. Diese Bremsen sind im Allgemeinen Verschleißteile, die nach einer gewissen Zeit ausgetauscht werden müssen, um einen Ausfall der Blockiereinrichtung zu vermeiden. Zusätzlich nimmt natürlich auch die Bremsleistung mit der Zeit ab. Zudem benötigen die Motoren samt Blockiereinrichtung meist eine Überlastkupplung, um einen Bruch an der Blockiereinrichtung zu vermeiden.

### KURZE BESCHREIBUNG DER ERFINDUNG

Aufgabe der vorliegenden Erfindung ist daher die Bereitstellung einer Wandsäge mit einer Blockiereinrichtung, welche eine nicht gewollte Bewegung der Wandsäge entlang der Führungsschiene beziehungsweise eine nicht gewollte Bewegung des Schwenkarms verhindert, bei der die Nachteile des Stands der Technik verringert sind.

Diese Aufgabe wird erfindungsgemäß durch eine Wandsäge gelöst, welche entlang einer Führungsschiene verschiebbar ist und eine Sägeeinheit mit Schwenkarm und einem auf dem Schwenkarm montierbarem Sägeblatt, vorzugsweise einen Blattschutz mit Schutzführung, und zumindest einen Motor umfasst, wobei der Motor ein Permanentmagnetmotor ist, wobei der zumindest eine Motor die Wandsäge entlang der Führungsschiene bewegt und den Schwenkarm antreibt, dadurch gekennzeichnet, dass das Rastmoment der Permanentmagnetmotoren im Verhältnis zum Nenndrehmoment größer als 20 %, vorzugsweise größer als 30 % ist.

Die erfindungsgemäße Wandsäge wird daher mit einem Permanentmagnetmotor mit einem hohen Rastmoment betrieben, was normalerweise bei Verwendung dieser speziellen Motoren vermieden wird. Für die erfindungsgemäße Wandsäge wird das hohe Rastmoment des Permanentmagnetmotor genutzt, um eine Blockiereinrichtung für die Wandsäge zu erhalten. Dabei ist das Rastmoment einerseits hoch genug gewählt, dass es die Wandsäge bei unbeabsichtigter Betätigung, beispielsweise durch Anstoßen, vom Fahren entlang der Führungsschiene zurückhält und andererseits niedrig genug gewählt, sodass beim Betrieb der Wandsäge kein unruhiger Lauf feststellbar ist. Je nach Ausführungsvariante der Wandsäge muss bei gewähltem Rastmoment eine Last von mindestens 300 kg auf die Wandsäge drücken, um diese in Bewegung zu setzten und den Permanentmagnetmotor in die nächste Rastposition zu bewegen.

Gegenüber dem Stand der Technik ist keine Blockiereinrichtung vorgesehen, die ein Verschleißteil ist, deren Bremswirkung über die Lebensdauer der Wandsäge nachlässt, sondern der Permanentmagnetmotor hat aufgrund des erhöhten Rastmoments selbst diese Wirkung. Obwohl man normalerweise stets bemüht ist, das Rastmoment bei Permanentmotoren sehr gering zu halten, geht man bei der Erfindung einen anderen Weg und nutzt einen Permanentmagnetmotor mit sehr hohem Rastmoment.

Das im Vergleich zum Drehmoment hohe Rastmoment wirkt wie eine Rutschkupplung, da der Motor erst bei genügend hohem Drehmoment, das heißt bei Überlast, durchrutscht. Durch dieses Funktionsprinzip wird für die erfindungsgemäße Blockiereinrichtung auch keine Überlastkupplung benötigt.

In einer weiteren Ausführungsvariante umfasst die Wandsäge einen zweiten Permanentmagnetmotor zum Antreiben des Schwenkarms.

Bevorzugt ist auch das Rastmoment des zweiten Permanentmagnetmotoren im Verhältnis zum Nenndrehmoment größer als 20 %, vorzugsweise größer als 30 %. Eine obere Grenze ergibt sich für den Fachmann aufgrund der erforderlichen Kräfte für jeden der Permanentmagnetmotoren. Beispielsweise kann die obere Grenze 80% sein.

Das heißt, auch dieser zweite Permanentmagnetmotor dient einerseits als Antrieb für den Schwenkarm und anderseits als Blockiereinrichtung. So wird vermieden, dass der Schwenkarm mit montiertem Sägeblatt unbeabsichtigt in die Wand eintaucht oder austaucht.

Die Rastmomente der Permanentmagnetmotoren ermöglichen auch eine Sicherung der Wandsäge auf beispielsweise einer schiefen Ebene, auf welcher der Permanentmagnetmotor bremsend wirkt.

### DETAILLIERTE BESCHREIBUNG DER ERFINDUNG

Um die Erfindung besser zu veranschaulichen, werden die wesentlichen Merkmale anhand von bevorzugten Ausführungsformen der erfindungsgemäßen Wandsäge mit Permanentmagnetmotor in folgender Figur dargestellt.

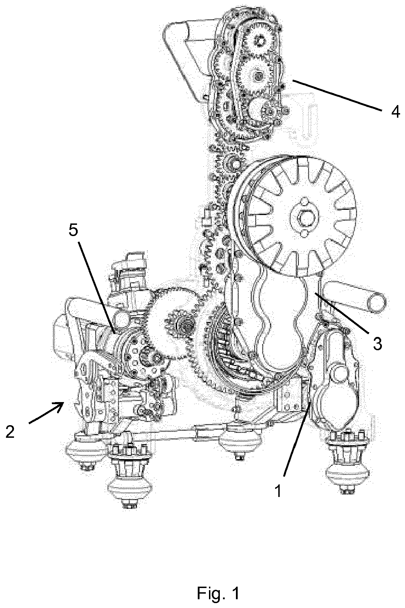

Fig. 1 zeigt eine Ausführungsform einer Wandsäge mit Schutzführung und Dreharm und die erfindungsgemäßen Permanentmagnetmotoren.

Die erfindungsgemäße Wandsäge ist entlang einer (nicht gezeigten) Führungsschiene verschiebbar und umfasst eine Sägeeinheit 2 mit Schwenkarm 3. Auf dem Schwenkarm 3 ist ein Sägeblatt montierbar. Bevorzugt umfasst die Wandsäge einen Blattschutz, welcher an einer Schutzführung 4 montierbar ist. Die in Fig. 1 dargestellte beispielshafte Schutzführung 4 umfasst ein Zahnradgetriebe, welches die beweglichen Teilarme der Schutzführung derart bewegt, dass der an einem der Teilarme montierte Blattschutz bei Bewegung des Schwenkarms 3 ständig das gesamte montierte Sägeblatt umschließt.

Außerdem umfasst die Wandsäge zumindest einen Motor 1, wobei der Motor ein Permanentmagnetmotor ist. Der zumindest eine Motor 1 bewegt die Wandsäge entlang der Führungsschiene und/oder treibt den Schwenkarm an. Das Rastmoment des erfindungsgemäßen Permanentmagnetmotoren ist im Verhältnis zum Nenndrehmoment größer als 20 %, vorzugsweise größer als 30 %.

Außerdem kann die erfindungsgemäße Wandsäge einen zweiten Permanentmagnetmotor 5 umfassen. Dieser befindet sich wie in Fig. 1 ersichtlich im oberen Bereich der Sägeeinheit 2 und ist mit dem Schwenkarm 3 verbunden. Daher kann der zweite Permanentmagnetmotor 5 den Schwenkarm 3 antreiben. In der in Fig. 1 dargestellten Ausführungsform mit Zahnradgetriebe ist der zweite Permanentmagnetmotor 5 mit einem Zahnrad des Getriebes verbunden und setzt somit das gesamte Zahnradgetriebe in Gang.

Das Rastmoment des zweiten Permanentmagnetmotoren 5 ist im Verhältnis zum Nenndrehmoment ebenfalls größer als 20 %, vorzugsweise größer als 30 %.

Permanentmagnetmotoren weisen einen zylindrischen Rotor auf, welcher abwechselnd mit Süd- und Nordpolen magnetisiert ist, sowie einen Stator. Der Permanentmagnetmotor weist bevorzugt *n* Pole auf, wobei *n* zumindest 4 - zum Beispiel 4, 6, 8, 10 oder 12 vorzugsweise 8 oder 10 - beträgt, die symmetrisch um die Rotationsachse des Rotors angeordnet sind. Daraus ergibt sich, dass der Permanentmagnetmotor immer in einem Winkel von 360° / n einrastet, also bei n = 8 oder 10 bei 45° oder 36°. Die Pole des Stators inklusive seines magnetischen Rückschlusses schließen den durch die Dauermagnete des Rotors erzeugten magnetischen Kreis. Im nicht bestromten Motor existiert somit ein geschlossener magnetischer Kreis. Damit hat der Motor bereits ohne Zuführung von Energie ein magnetisches Rastmoment. Im unbelasteten Motor nehmen Rotor und Stator demnach eine Vorzugsstellung ein, bei der sich deren Pole gegenüberstehen.

Das Rastmoment ist ein wichtiger Parameter bei Permanentmagnetmotoren. Das Rastmoment entsteht durch das Nutrastmoment und das Reibungsmoment. Das Nutrastmoment wird durch die Anziehung bzw. Wechselwirkung der Magnetpole an den Zähnen in einem nicht angetriebenen Motor erzeugt. Das Reibungsmoment wird durch Lagerwiderstand, Montagetoleranz oder andere mechanische Montageprobleme zurückgeführt. Im Allgemeinen wird bei Permanentmagnetmotoren versucht das Rastmoment im Vergleich zum Drehmoment möglichst klein zu halten, um beispielsweise Drehmomentwelligkeit, Vibration und Rauschen zu vermeiden. Genauer gesagt, wird das Rastmoment als Nachteil der Permanentmagnetmotoren gesehen und es werden generell nur Motoren mit geringem Rastmoment verwendet.

Im Gegensatz dazu soll der erfindungsgemäße Permanentmagnetmotor im Verhältnis zum Nenndrehmoment ein möglichst großes Rastmoment aufweisen. Dadurch übernimmt das Rastmoment beim unbelasteten Motor die Funktion einer Bremse und wird explizit ausgenutzt. Zusätzlich wirkt das Rastmoment auch als Überlastschutz für den Motor.

Die erfindungsgemäße Wandsäge mit Permanentmagnetmotor bietet somit den großen Vorteil einer automatisch in den Motor integrierten Bremse. Bei der Bremse handelt es sich auch nicht wie üblicherweise um ein Verschleißteil, da die Ausführung des Permanentmagnetmotoren im unbelasteten Zustand bremst, ohne zusätzliche Bremsen wie beispielsweise Scheibenbremsen zu umfassen. Außerdem ändert sich auch die Bremswirkung der Permanentmagnetmotoren über die Lebensdauer der Wandsäge nicht. Die erfindungsgemäße Wandsäge samt Permanentmagnetmotoren ermöglicht somit eine sehr kostengünstige und wartungsfreie Blockiereinrichtung zur Sicherung der Wandsäge.

## Patentansprüche

1. Wandsäge, welche entlang einer Führungsschiene verschiebbar ist, umfassend eine Sägeeinheit (2) mit Schwenkarm (3) und einem auf dem Schwenkarm (3) montierbarem Sägeblatt, vorzugsweise einen Blattschutz mit Schutzführung (4), und zumindest einen Motor (1), wobei der Motor ein Permanentmagnetmotor ist, wobei mit dem zumindest einen Motor (1) die Wandsäge entlang der Führungsschiene bewegbar und/oder der Schwenkarm antreibbar ist, **dadurch gekennzeichnet, dass** das Rastmoment der Permanentmagnetmotoren im Verhältnis zum Nenndrehmoment größer als 20 %, vorzugsweise größer als 30 % ist.

2. Wandsäge nach Anspruch 1, **dadurch gekennzeichnet, dass** die Wandsäge einen zweiten Permanentmagnetmotor (5) umfasst, wobei mit dem zweiten Permanentmagnetmotor (5) der Schwenkarm antreibbar ist.

3. Wandsäge nach Anspruch 2, wobei auch das Rastmoment des zweiten Permanentmagnetmotoren (5) im Verhältnis zum Nenndrehmoment größer als 20 %, vorzugsweise größer als 30 % ist.

4. Verwendung einer Wandsäge mit zumindest einem Permanentmagnetmotor nach einem der Ansprüche 1 bis 3, wobei das Rastmoment des zumindest einen Permanentmagnetmotors als Blockiereinrichtung bzw. Bremse für die Wandsäge verwendet wird.

5. Verwendung einer Wandsäge nach Anspruch 4, wobei das Rastmoment des zumindest einen Permanentmagnetmotoren als Rutschkupplung verwendet wird, wobei der Motor erst bei Überlast durchrutscht.

6. Verfahren zum Betreiben einer Wandsäge mit zumindest einem Permanentmagnetmotor nach einem der Ansprüche 1 bis 3, wobei das Rastmoment des zumindest einen Permanentmagnetmotors als Blockiereinrichtung bzw. Bremse für die Wandsäge verwendet wird.
